# EUROPEAN PATENT SPECIFICATION

(11) **EP 0 238 164 B1**
(45) Date of publication and mention of the grant of the patent: **03.11.1993**
(21) Application number: 87300394.1
(22) Date of filing: 16.01.1987
(51) Int. Cl.: G02F 1/133, B60J 3/04

(54) **Liquid crystal panel**
Flüssigkristallscheibe
Panneau à cristaux liquides

(30) Priority: 17.01.1986 US 820533
(43) Date of publication of application: 23.09.1987
(73) Proprietor: RAYCHEM CORPORATION, Menlo Park California 94025 (US)
(72) Inventor: McLaughlin, Charles W., Portola Valley California 94025 (US); Marsland, Steven, Sunnyvale California 94086 (US); Drzaic, Paul, Mountain View California 94043 (US)
(74) Representative: Cross, Rupert Edward Blount

(56) References cited:
- EP-A- 0 121 415
- EP-A- 0 168 180
- DE-B- 2 246 415
- US-A- 4 382 995
- US-A- 4 556 289

## Description

This invention relates generally to liquid crystal panels, and particularly to liquid crystal panels used for privacy, solar control, or both, and which simultaneously have good safety characteristics. More particularly, this invention relates to liquid crystal panels as utilized as architectural windows or in vehicles as a sunroof, window or interior partition construction.

Sunroofs or canopies have been used in automobiles and in other land and marine vehicles to provide the capability to vary the visible light entering such vehicles. Land and marine vehicles as well as aircraft have also utilized interior partitions to separate, for reasons of privacy, passengers from one another or operators of such vehicles from passengers. Various types of smoked or glazed windows are used in land and marine vehicles as well as aircraft to provide privacy to the passengers or operators.

Sunroofs utilized heretofore have comprised a slidably arranged portion of a vehicle's roof that may be open or closed either manually or automatically, as desired by the vehicle operator or passenger. Other sunroof configurations, sometimes called "moonroofs", do not open and close but provide a see-through section in the roof which lets ambient light enter the interior of the vehicle.

Partitions in vehicle interiors are often found in vehicles such as limousines. They are utilized to divide the passenger compartment of such vehicles from the driver's area. They may be utilized to provide privacy for the passengers. Exterior windows providing privacy to the passengers are often found in vehicles such as limousines, vans and recreational vehicles (RVs).

Safety glazing materials, in comparison with ordinary sheet glass, plate glass or float glass, are intended to reduce the likelihood of injury or the severity of injury in the event of their breakage. Such safety glazing materials often are incorporated in land or marine vehicles or aircraft where there is elevated exposure to impact or breakage. Such materials may be used in sunroofs, vehicle partitions and privacy windows. One safety glazing material may be superior for one type of hazard, whereas another may be superior against another type. Since accident conditions are not standardized, no one type of safety glazing material can be shown to possess the maximum degree of safety under all conditions, against all conceivable hazards.

Glass and films with selective light transmission properties have heretofore been used to reduce or eliminate glare, hot spots and/or thermal load on buildings or vehicles. Generally, such materials reduce visible light transmission and preferentially reflect infrared light. In some cases, such materials simply absorb light throughout the visible and/or infrared spectrum. These materials may be built into buildings or vehicles or applied afterward on a retrofit basis. In many cases where glass is used in buildings as well as in vehicles, safety glazing properties, as discussed above, are required.

There are three aspects of discomfort which these materials are designed to reduce. The first is glare, or high brightness in the visible spectrum, generally directly from the sun or sun reflection. The second is hot spots where the sun rays fall on a portion of the vehicle or building and heated far above the ambient air temperature, or where the sun's rays directly heat people. The third is general heat load, caused by sunlight, both direct and reradiated from outside the building or vehicle, which increases air temperature in the building or vehicle.

Most materials which reduce discomfort are passive and therefore have undesirable features. While they reduce glare, hot spots and thermal load, they do so at all times whether such reduction is desired or not. In many cases such as at night, or cloudy days, in morning or evening, there is no need for glare, hot spot or thermal load reduction, yet passive materials continue to reduce visibility at these times. Further, the sun's thermal heating can reduce energy use in winter, but passive materials cut the beneficial effect of the sun's heating in winter.

For these reasons a practical variable light transmission material has been sought. Such a material would reduce glare, hot spots and/or thermal load on bright summer days, but would switch to a high visibility high transmission window at all other times. Such a material would save energy and eliminate the space, weight and maintenance required for drapes.

The document EP-A-0 168 180 discloses a liquid crystal panel comprising first and second transparent sheets through which visible light incident thereon may be transmitted; a liquid crystal means located between said transparent sheets for controlling the amount of light transmitted through the panel as a function of a selected predetermined electric field applied across the liquid crystal means; and two transparent electrodes for applying said electric field between which the liquid crystal means is placed, the liquid crystal means consisting of a liquid crystal material operationally nematic having positive dielectric anisotropy which is confined within discrete volumes by a containment medium, the containment medium inducing in the liquid crystal molecules of the discrete volumes a generally distorted alignment which results in an isotropic scattering of incident light when no electric field is applied, the amount of said scattered light being reduced when said electric field is applied.

According to the present invention the panel further comprises a polarizer the axis of absorption of which is perpendicular to the panel.

The liquid crystal means is composed of (a) liquid crystal, preferably nematic or operationally nematic liquid crystal having positive dielectric anisotropy with certain index of refraction characteristics, in volumes formed by and/or bounded by (b) a containment medium. The liquid crystal can have optical anisotropy having birefringence, i.e. the ordinary and extraordinary indices of refraction scattering thereof are noticeably, actually and functionally different; one index of refraction preferably is matched to that of the containment medium to minimize refraction of light at the interface thereof and the other is different from that of the containment medium to cause refraction and, thus, scattering of light incident thereon. Otherwise the liquid crystal can have relatively low birefringence absorption with the index of refraction of the liquid crystal relatively closely matched to that of the containment medium to minimize refraction and scattering at the interface thereof; however, pleochroic dye in the liquid crystal material provides controlled attenuation of light by absorption of light as a function of a prescribed input to the liquid crystal material. Both embodiments modulate incident light.

the input to the liquid crystal material is an electric field. In the absence of such input the liquid crystal structure is distorted by surfaces of the containment medium, such as the surfaces bounding the volumes of liquid crystal in the containment medium. However, in response to an electric field the liquid structure will align or at least tend to align with respect to such field, the liquid crystal structure tending to assume a generally parallel alignment--the extent of such alignment being a function of the magnitude of the field. The liquid crystal is reversible in that upon removal of the field the liquid crystal structure reverts to the distorted alignment under influence of the mentioned surface.

Embodiments of the invention thus provides a liquid crystal panel that can be utilised as an architectural window, building skylight, vehicle sunroof, canopy, privacy glass, or vehicle or building interior partition, which panel uses liquid crystal material that is operable to determine the proportion of incident light, i.e., light which is incident on the panel, that passes through the panel.

Examples of this invention will now be described with reference to the drawings, in which:-
Fig. 1 is a schematic view of a vehicle including liquid crystal panels in accordance with one embodiment of the present invention utilised as a sunroof, window and interior partition;
Fig. 2 is a schematic, partial sectional view of the liquid crystal panel sunroof or window of Fig. 1;
Fig. 3 is a schematic partial sectional view of the liquid crystal panel interior partition of Fig. 1;
Figs. 4 and 5 are schematic illustrations of a liquid crystal material for use in a panel according to one embodiment of the invention, including a volume of liquid crystal in a containment medium with the liquid crystal structure in distorted and parallel alignment, respectively;
Fig. 6 is a schematic illustration of a liquid crystal material for use in a panel according to one embodiment of the invention including a volume of liquid crystal with pleochroic dye in a containment medium with the liquid crystal structure in distorted alignment; and
Fig. 7 is a schematic, partial sectional view of a liquid crystal panel according to one embodiment of the invention utilised as an architectural window or interior building partition.

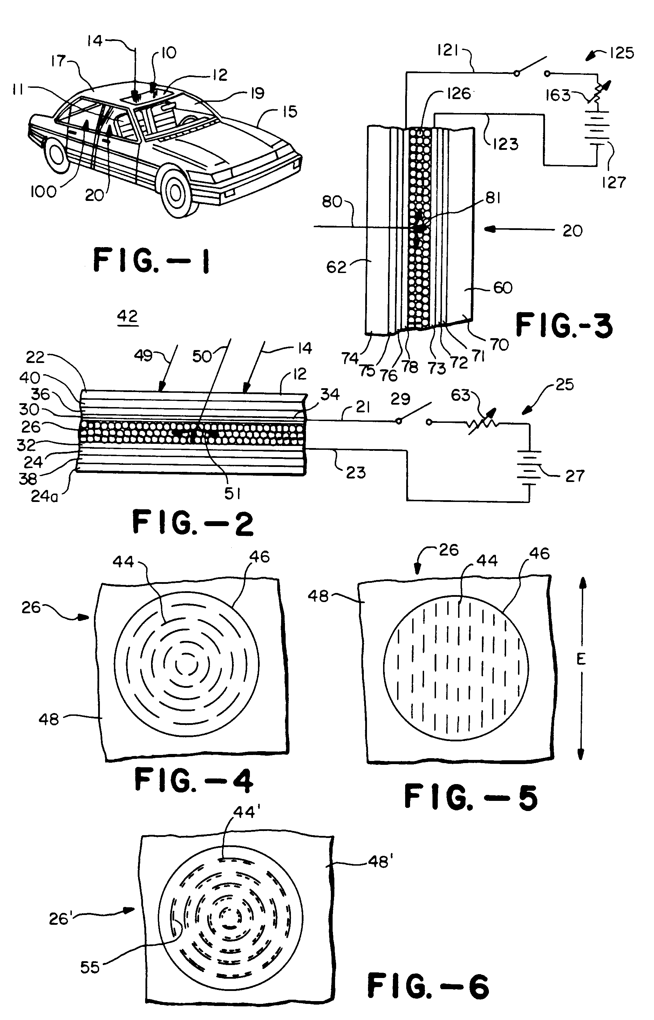

Referring now in detail to the drawings, wherein like reference numerals designate like parts in the several figures, and initially to Fig. 1, a liquid crystal sunroof panel 10, a liquid crystal window 100, and a liquid crystal interior partition 20, in accordance with one embodiment of the present invention, in a vehicle 15 are shown.

Window 100 divides the passenger compartment 11 from the exterior of the vehicle. The window functions as an energy control element that, as discussed below, may maximize infrared light reflectivity, visible light transmissivity, and light scattering. The window 100 reduces both glare and heat incident upon passengers in the vehicle. The window also provides privacy for the passengers.

The sunroof is located in the vehicle's roof 17. It includes a face 12 onto which incident light 14 may impinge. The sunroof 10 functions as an energy control element that, as discussed below, may maximize infrared light reflectivity and visible light transmissivity. The sunroof 10 reduces both glare and heat in the vehicle's interior.

The interior partition 20 divides the passenger compartment 11 of the vehicle from the driver's area 19. The partition is designed to provide privacy for the passengers in vehicle 15.

In the embodiment of liquid crystal sunroof 10 illustrated in detail in Fig. 2, the sunroof includes two transparent surfaces 22, 24 and liquid crystal material 26 therebetween. The transparent surfaces 22, 24 allow visible light 14 incident thereon to pass therethrough. Transparent surface 22 may be composed of a material that provides maximum visible light transmission or may have selective light transmission, for example, of colors or ultraviolet or infrared. Transparent surface 24 is preferably composed of a material that provides maximum visible light transmission.

Preferably, the outermost surfaces have anti-abrasive characteristics that make them scratch resistant. Glass, such as a tempered glass, may be utilized for surface 22, while the interior surface 24 may comprise a flexible plastic to be used as a substrate for electrode 32. Surface 24 may be formed of materials such as polyester or polyethersulfone protected with a scratch-resistant coating 24a such as polyurethane or a silica-based coating. Alternatively, interior surface 24 and coating 24a may be combined as a flexible, scratch-resistant plastic, such as polyimide, which can have an elctrode applied thereto. Another alternative is for surface 24 and coating 24a to comprise a rigid, abrasion-resistant material, such as glass.

The liquid crystal layer 26, combined with the plastic layer 24, and any scratch-resistant coating included on layer 24 act as a safety material to decrease the likelihood of personal injury due to an impact on the liquid crystal panel. Thus, the sunroof or window will crack or break under sufficient impact, but the pieces of glass will tend to adhere to the plastic material including directly adhering to the liquid crystal layer itself. Such a sunroof or window will offer protection from broken glass by the plastic material, including the liquid crystal layer.

The liquid crystal material therefore functions not only as an electro-optical device to modulate light but also acts as a bonding agent that produces a safety glazing effect that reduces the likelihood of injury to persons in the vehicle due to an impact on the panel. This effect is most pronounced when surfaces 22, 24, including any electrodes thereon, and the liquid crystal material 26 are juxtaposed.

The optical characteristics of the liquid crystal material 26 are a function of whether or not a prescribed input is applied to the liquid crystal material. And in the case of the liquid crystal material 26' (see Fig. 6), in particular, optical absorption characteristics are a function of the magnitude of the prescribed input. An example of a prescribed input would be an electric field.

A schematic representation of a circuit 25 for selectively applying or not an electric field to the liquid crystal material 26 is illustrated in Fig. 2. Such circuit 25 includes an electric power supply 27, such as a battery, indeed possibly the battery or other electrical supply of vehicle 15, and a switch 29. The electric power supply may alternatively be a source of alternating current. The circuit 25 is connected by electrical leads 21, 23 to electrodes 30, 32 positioned on opposite sides or surfaces of the liquid crystal material 26. Operationally, with the switch 29 open, no electric field is applied to the liquid crystal material, which then is in a so-called field-off or de-energized condition or mode. With the switch 29 closed, an electric field is applied across the liquid crystal material, which then goes into a so-called field-on condition or mode. The light transmissive characteristics of the sunroof 10 or window 100 will depend on the field-on or field-off condition of the liquid crystal material 26, as described in further detail below.

The switch 29 may be a manually operated switch. However, an advantage of the liquid crystal sunroof of the invention is that the circuit 25 could include automatically responsive components. For example, the switch 29 could be one that is responsive automatically to a prescribed input thereto without requiring manual operation; such an exemplary switch 29 may be a photosensitive device or combination of parts or devices that can respond to intensity, existence, etc. of light incident on the sunroof, ambient light conditions, etc. Field-off operation of the liquid crystal results in a scattering and reduction in visible light transmitted through sunroof 10, or window 100, as is described further below.

The circuit 25 further may include a variable element 63, such as a variable resistor or potentiometer, or a circuit for varying the magnitude of electric field applied by the electrodes 30, 32 to the liquid crystal material 26. Such variable element 63 may be manually adjusted, say by the vehicle operator, to adjust the amount of visible light, i.e., the proportion of the incident light 14, that is transmitted through the sunroof 10 or window 100 to the vehicle interior to provide a varying glare and light reduction/adjustment capability for the sunroof.

The sunroof 10 or window 100 may include a support of glass, plastic, or even of metal or other material, as may be desired, that functions as frame (not illustrated) and provides support for the several parts of the sunroof or window.

The electrode 30 may be of various materials, such as chrome, indium oxide, tin oxide, silver, stainless steel, indium tin oxide, and so on, capable of receiving an electrical input from the conductor 21 and of cooperating with the electrode 32 to apply an electric field to the liquid crystal material 26. Similarly, the electrode 32 may be of chrome, indium oxide, tin oxide, gold, silver, indium tin oxide, etc. for such electrical purpose. Such electrodes preferably are at opposite sides or surfaces of the liquid crystal material 26 and extend over, across and parallel to such respective sides or surfaces. Electrodes 30, 32 preferably comprise a conductive coating that is transparent to visible light, although electrodes which provide preferential light transmission characteristics, such as color tint or ultraviolet or infrared filter, may be used. The electrode coatings should provide maximum transmissivity of visible light and have a resistivity of less than 1,000 ohms per square metre.

The embodiment of the invention, as it is illustrated in Fig. 2, may include an infrared light reflective material 34. The electrode 30 and an infrared reflective material 34 may be the same part and indeed may take the form of a stainless steel or tin oxide, optically transparent, infrared reflective and electrically conductive coating on layer 26. In such case, the material 34 preferentially reflects infrared light while allowing visible radiation to pass.

Material 34 may also uniformly reflect visible and infrared light. Reducing the transmission of infrared energy through the sunroof 10 is desirable as it will make the vehicle interior more hospitable to its occupants by decreasing the heat transmitted into and thus the temperature of the vehicle interior.

If desired, the electrode 30 and the infrared reflective material 34 may be different materials and/or constitute different layers of the sunroof or window. In this configuration, the electrode 30 may be optically transparent or at least substantially so to avoid attenuating light as it is transmitted therethrough as incident beams.

Alternatively, the outer surface 22 may comprise a glass that reflects infrared energy. Such a glass may maximize visible light transmission. A tempered glass composition including a low E coating to reflect infrared energy may form surface 22. This composition may also have a tinted layer.

The liquid crystal material 26 may be coated and dried onto a flexible plastic, scratch-resistant substrate having a conductive coating. The flexible substrate could, e.g., form the inner surface 24 and the conductive coating form an electrode. A protective, removable cover slip may be applied to the dried liquid crystal material, and the resultant sandwich sold as a roll stock to sunroof or vehicle manufacturers who would remove the cover slip prior to use in constructing a sunroof or window.

The sunroof 10 or window 100 may further include a layer 36 or ultraviolet light absorbing material. Layer 36 may be placed at any level above the liquid crystal material 26. Layer 36 may be interposed between electrode 30 and liquid crystal material 26 if it still were possible to provide an adequate electric field to the liquid crystal material when desired. As illustrated in Figure 2, it may also be located between electrode 30 and outer surface 22. Layer 36 may comprise such ultraviolet light absorbing materials as Nitto 70 Denko UV Filter UVF-DOZ-E, or plexiglass UF-3 from Rohm and Haas, Philadelphia, Pennsylvania, or Polyvinyl Butyral (PVB) from Dupont, Wilmington, Delaware. The absorption of ultraviolet light prevents deterioration, i.e., fading, of the colors in the vehicle's interior as well as the discoloration, i.e., yellowing of the liquid crystal material.

The absorption of substantially all of the ultraviolet light impinging on sunroof 10 or window 100 may also be achieved by imbibing the liquid crystal material 26 with an ultraviolet light absorbing material. Such additives that may be used include 2 (2ʹ-Hydroxy-5ʹ-methylphenyl) benzotriazole (Tinuvin P by Ciba-Geigy, Geneva, Switzerland) or Nickel bis [O-ethyl (3,5 di-t-butyl-4-hydroxbenzyl)] phosphonate (Irgastab 2002 by Ciba-Geigy).

The sunroof 10 or window 100 is further improved by utilizing a special light polarizer. The polarizer should have its axis of absorption perpendicular to the face of the polarizer. The polarizer 38 is provided to reduce the haze otherwise present when the liquid crystal material is in the field-on state. The polarizer 38 may be interposed between electrode 32 and inner surface 24. Alternatively, if a protective coating 24a is utilized, polarizer 38, as shown, may be located between coating 24a and surface 24.

The haze perceived by an observer is of preferentially one polarization. This polarization occurs when the light illuminating the liquid crystal material 26, or when the observer viewing the liquid crystal material is at an angle other than normal to the surface of the layer of liquid crystal material. Under such conditions, one polarization of light is not scattered. The polarizer 38 will preferentially absorb the polarization incorporating the scattered light, resulting in a less hazy, and thus clearer, liquid crystal material in the field-on state.

Liquid crystal material that has mixed with the liquid crystal a pleochroic dye (see Fig. 6) may achieve the same effect without using a polarizer. By selecting the proper percentage of pleochroic dye for the liquid crystal, the above-discussed haze effect can be reduced.

A depolarizer 40 may also be included in the sunroof structure. The depolarizer 40 is provided to increase the brightness of an image observed from the vehicle's interior through the sunroof or window. Depolarizer 40 may be a separate layer or it and outer surface 22 may comprise one element. Alternatively, the depolarizer 40, the ultraviolet layer 36 and the electrode 30 may be combined as one element. The depolarizer is preferably interposed between the liquid crystal material 26 and light incident on the sunroof 10 from the exterior of the vehicle, which is represented by light beam 14.

Depolarizer 40 may be a birefringent material, e.g., a stretched plastic such as a Mylar^{R} or polyethylene sheet, which will change the polarization of light passing therethrough. The use of depolarizer 40 is desirable because the polarization of light that is not scattered by the liquid crystal material in the field-on state is preferentially reflected at the interface between the outer surface 22 and the ambient air 42.

If depolarizer 40 is not utilized, the special polarizer 38 will still work, but the brightness of the image transmitted to an observer within the vehicle by the non-absorbed polarization will be reduced, since a substantial portion of the light has been reflected before impinging upon the liquid crystal material 26. The depolarization 40 effects light that is directed toward the liquid crystal material 26 and changes the polarization of some fraction of that light (before it reaches the liquid crystal material) into the polarization that is not scattered by the liquid crystal material in the field-on state. Thus, the brightness of the observed image will be increased.

The liquid crystal material 26 preferably is of the type disclosed in U.S. Patent No. 4,435,047 and in the above-mentioned patent applications. The liquid crystal material should be selected to maximise the scattering of light in the field-off state so that glare, hot spots and heat load in the vehicle interior are reduced. Generally, the transmissivity of visible light when the liquid crystal material is in the field-on state should be in excess of 70%, and desired field-off state transmissivity will vary with the nature of layer 22 and the off state scattering, absorption and reflection properties of layer 26. Overall light transmission through the sunroof or window of 40% or less in the field-off state is preferable where heat load is important.

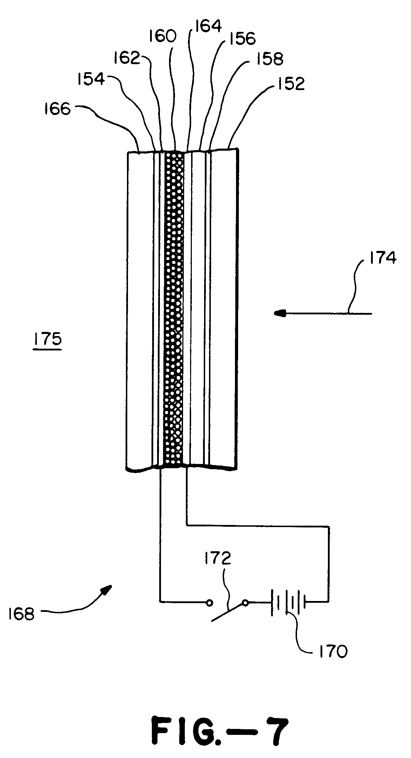

In particular, as is represented schematically in Fig. 4, such liquid crystal material 26 preferably is formed of operationally nematic liquid crystal 44 in a plurality of volumes 46 formed in or defined by a containment medium 48. The liquid crystal 44 preferably is optically transparent, and the containment medium preferably also is optically transparent. In the embodiment illustrated in Figs. 4 and 5, the liquid crystal material 26 does not include any pleochroic dye. However, the containment medium 48 does have an index of refraction and the liquid crystal material is birefringent, being optically anisotropic and having positive dielectric anisotropy during operation.

Preferably the ordinary index of refraction of the liquid crystal 44 in the presence of an electric field, i.e., in field-on condition, the field being of adequate strength, matches the index of refraction of the containment medium. Fig. 5 illustrates the alignment of the liquid crystal 44 with respect to an applied electric field E. However, in the absence of an electric field the containment medium, more specifically, the surface(s) thereof, e.g., the surfaces of the containment medium walls bounding each of the volumes 46 of liquid crystal 44, tend to distort the natural liquid crystal structure to present to a great extent at the interfaces of the liquid crystal and surfaces the extraordinary index of refraction characteristic of the liquid crystal; and such extraordinary index of refraction is different from the index of refraction of the containment medium. Therefore, when in such distorted alignment condition, sometimes referred to nematic curvilinearly aligned phase ("NCAP") of the liquid crystal, there is a difference in the indices of refraction at the interface between the liquid crystal and containment medium, which causes refraction and, thus, scattering of light incident thereon. Furthermore, due to the varying alignment of liquid crystal molecules within the capsules, the index of refraction varies within the capsules, causing further scattering of incident light. Fig. 4 illustrates such distorted alignment of the liquid crystal structure in the absence of an electric field.

As is disclosed, in the above-referenced patent, the volumes 46 of liquid crystal material may be separate from one another, may be interconnected to one or more volumes, or may include both separate and interconnected volumes. The liquid crystal material 26 may be prepared in the form of an emulsion of liquid crystal and containment medium which is subsequently dried or cured. Alternatively, the liquid crystal material 26 may take the form of a plurality of individually formed capsules of liquid crystal in a containment medium. The liquid crystal material may be considered encapsulated liquid crystal material. In any event, regardless of what the liquid crystal material is called or how it is made, it should provide an operative function such that the surface of containment medium confronting liquid crystal will distort the natural structure of the liquid crystal absent a prescribed input. Exemplary materials of which the liquid crystal material may be composed and methods for forming such liquid crystal material, and particularly the volumes of liquid crystal and containment medium, are disclosed in the aforementioned patent.

One such liquid crystal is nematic liquid crystal, and two examples of containment media are polyvinyl alcohol or latex. NCAP liquid crystal material in a latex medium is described in application Serial No. 705,209. Also, although the distorted alignment of liquid crystal structure illustrated in Fig. 4 is of the type wherein the liquid crystal structure generally is parallel to the wall of the containment medium bounding the given volume of liquid crystal, such distortion may result in the liquid crystal structure being generally normal to the volume wall, at least in proximity to such wall.

In field-on operation, the switch 29 has been closed so that an electric field is being applied to the liquid crystal material 26, which aligns with respect to the electric field (see Fig. 5). The liquid crystal structure is considered to assume a generally parallel alignment in such field-on condition. Since the ordinary index of refraction of the liquid crystal 44 in field-on condition is matched to that of the containment medium 48, the liquid crystal material 26 becomes essentially optically transparent and light incident thereon is not refracted at interfaces between liquid crystal and containment medium. During such field-on operation of sunroof 10 or window 100, incident visible light represented by light ray 49 is transmitted through the varying layers of the sunroof or window to the vehicle interior. Preferably, as discussed heretofore, ultraviolet light is absorbed and infrared light reflected.

Field-off operation of the sunroof 10 occurs when the switch 29 is open, and, therefore, no electric field is applied to the liquid crystal material 26 (see Fig. 4). Accordingly, light which is incident on the liquid crystal material 26 is refracted and is scattered. This would include that light transmitted through the sunroof from outside the vehicle as well as light that is transmitted toward the sunroof from inside the vehicle. Such scattering is effected because the extraordinary index of refraction of the liquid crystal 44 is different from the index of refraction of the containment medium 48.

An incident light ray 50, which is scattered in the liquid crystal material 26, is representatively illustrated in Fig. 2. Such scattered light, which is generally represented at 51, creates a generally uniform field of illumination somewhat like the appearance of a relatively dim diffuse light transmitted through translucent diffusing material. Since a portion of the overall light incident on the sunroof 10 during such field-off operation is scattered, indeed is scattered in directions not toward the eye of the observer, the sunroof 10 or window 100 effectively provides an attenuated light output with respect to the vehicle interior, i.e., of reduced glare and intensity. Furthermore, since light which succeeds in entering the vehicle is scattered in directions away from the driver and passenger, the sunroof 10 or window 100 effectively diffuses and attenuates light incident on the driver and passenger, reducing heat and glare incident on the driver and passenger. Therefore, since light is modulated in this manner, the range of temperatures to which the vehicle occupants are subjected is extremely narrowed.

Thus, it will be appreciated that the sunroof 10 or window 100 can be operated in field-off condition to reduce the glare, heat and light or provide privacy that would otherwise be observable to the vehicle's occupants. On the other hand, when there is no need to reduce glare or heat, or provide privacy, the sunroof 10 or window 100 may be operated in the non-scattering or field-on mode of the liquid crystal material 26 so that substantially all light incident on the sunroof, other than preferably ultraviolet and infrared light, will be transmitted to the vehicle interior. Thus, the surroundings are observable by the occupants of the vehicle through the sunroof 10 or window 100. Also, occupants of the vehicle are observable from outside the vehicle through the sunroof 10 or window 100.

The degree of light scattering may also be varied between the field-off and field-on states by utilizing the variable element 63 to adjust the magnitude of the electric field applied to the liquid crystal material.

Referring now to Fig. 6, the sunroof 10 may include liquid crystal material 26' that has mixed with the liquid crystal 44' a pleochroic dye 55. The liquid crystal 44' preferably is operationally nematic and has positive dielectric anisotropy. However, unlike the liquid crystal 44, the liquid crystal 44' has low birefringence characteristics. Moreover, the liquid crystal 44' has an index of refraction that is matched closely, if not identically, to that of the containment medium 48' so that whether in field-on or field-off condition there will be no or only a minimum of light refraction at the interfaces between the liquid crystal 44' and containment medium 48'. Thus, operation of the liquid crystal material 26' is analogous to operation of the liquid crystal material disclosed in patent application serial No. 477,078 (US-A-4 556 289).

The pleochroic dye in the liquid crystal 44ʹ will absorb some of the light transmitted therethrough, and the degree of such absorption is a function of whether or not an electric field is applied to the liquid crystal material and of the magnitude of such field. Preferably, such absorption in field-on condition of the liquid crystal should be zero or as close to zero as possible to maximize intensity of transmitted light in the field-on state.

Specifically, the dye alignment follows the alignment of the liquid crystal 44ʹ, as is illustrated schematically in Fig. 6, for example, and is explained in further detail in the above-mentioned patent and application Serial No. 477,078 (US-A-4 556 289). Therefore, when the liquid crystal structure is in distorted alignment, the dye will provide a relatively substantial amount of light absorption. However, when the liquid crystal 44ʹ is in parallel alignment, e.g., like that liquid crystal shown in Fig. 5, light absorption by the dye will be minimized. As the magnitude of electric field is increased or decreased, the amount of distortion of the liquid crystal material will vary, and the amount of absorption by the dye also will correspondingly vary.

The liquid crystal material 26ʹ through light absorption may be utilized to alternate the amount of infrared energy entering the vehicle through the sunroof. Also, the liquid crystal material 26ʹ can be utilized to control glare by means of its scattering properties. Further, proper selection of the percentage of pleochroic dye in the liquid crystal material will effectively reduce the haze of the liquid crystal material.

When the switch 29 is open, the liquid crystal material 26ʹ is in distorted alignment, field-off condition and the sunroof will reduce the glare and light entering the vehicle interior. In the field-on condition of the liquid crystal material 26ʹ, the sunroof 10 will provide maximum light transmission.

The liquid crystal interior partition 20 is illustrate in greater detail in Fig. 3. Such a partition may function as a barrier providing privacy between the vehicle's operator and its passengers. A limousine divider is an example of such a partition. The partition may also be operable to reduce glare or to provide shade. The construction of such a partition may be somewhat similar to the sunroof 10 described heretofore.

The partition 20 includes first and second transparent surfaces 60, 62. The transparent surfaces 60, 62 permit the transmission of visible light through the partition 20. Like the transparent surfaces of the sunroof 10, transparent surfaces 60, 62 are fabricated from a material that provides maximum visible light transmission. These surfaces may have anti-abrasive characteristics that make them scratch resistant. A tempered glass may be used to form surfaces 60, 62. The glass may also be tinted.

Surfaces 60, 62 may also possess anti-lacerative or shatter-resistant properties. In particular, surface 60 may comprise a glass sheet 70 which is adhered to a plastic substrate 72 by means of an optically transparent adhesive 71. The plastic substrate 72 may comprise such materials as polyester or polyethersulfone. The adhesive may be an ultraviolet-curable, transparent adhesive having sufficient bonding strength. An examples of optical adhesive 71 that is suitable for use in the construction of partition 20 is Adlam^{R} ultraviolet adhesive available from Adlam, S.A., Geneva, Switzerland, or PVB from Dupont.

Similarly, surface 62 may comprise a glass sheet 74 secured to a plastic substrate 76 of the type of material discussed above by means of an adhesive 75 that is substantially transparent to visible light. Such a construction would provide partition 20 with sufficient safety glazing properties such that if the transparent surfaces crack or break under sufficient impact, the resultant pieces of glass will not fly freely through the interior of the vehicle but rather will tend to adhere to one or the other of the plastic substrates 72, 76. The thickness of the central layers 71, 72, 75, 76, and 126 combined with the existence of multiple layers of differing materials, including the liquid crystal layer, increases significantly the force necessary to penetrate the panel, making it difficult to break.

Partition 20 further includes electrodes 73, 78 preferably disposed at opposite sides or surfaces of the liquid crystal material 126 to extend over, across and parallel to the respective sides or surfaces of the liquid crystal material. As in the case of the sunroof or window, electrodes 73, 78 may be of various materials, such as indium oxide, tin oxide or indium tin oxide. Preferably, their resistance is between 50 and 1,000 ohms per square metre. A Mylar^{R} film with a precoated ITO electrode, known as Intrex, may be purchased from Sierracin of Sylmar, California and may be utilized in the construction of partition 20, as plastic substrates 72, 76 with precoated electrodes 73, 78.

A schematic representation of a circuit 125 for selectively applying or not an electric field to the liquid crystal material 126 is also shown in Fig. 3. The circuit includes an electric power source 127, such as a car battery, a switch 129, electrical leads 121, 123 for connecting the power source to electrodes 73, 78. With the switch 129 open, no electric field is applied to the liquid crystal material 126, which is then, as discussed heretofore, in the field-off or de-energized condition or mode. With the switch 129 closed, an electric field is applied across the liquid crystal material, which then goes into the field-on condition or mode.

The light transmissive characteristics of the partition 20 will depend on whether the liquid crystal material 126 is in the field-on or field-off mode. Particularly, if it is desired to block the transmission of light through partition 20, thereby providing a privacy barrier, switch 29 would be open and light incident on the partition, such as that represented by light beam 80, is refracted and scattered as shown at 81. To eliminate the privacy barrier effect, only requires that switch 129 be closed so that an electric field is applied across the liquid crystal material 126 to permit the transmission of light therethrough.

Circuit 125 may, alternatively, include a variable element 163, such as a variable resistor, for varying the magnitude of the electric field applied across the liquid crystal material, thus varying the extent to which light is transmitted through partition 20.

As an alternative embodiment, the partition 20 may include a liquid crystal material that has mixed with the liquid crystal a pleochroic dye. Such liquid crystal and liquid crystal material would have the characteristics discussed heretofore with respect to Fig. 6. More specifically, a Sudan black B pleochroic dye may be dissolved in the liquid crystal. Enough dye would be dissolved in the liquid crystal such that when an electric field is applied to the liquid crystal material, the material will change from black to nearly clear-transparent. Thus, in the field-off state, a black barrier will be provided by the partition 20.

An edge seal of approximately 3.175 mm (1/8") may be formed around the perimeter of the partition 20. The liquid crystal material 126 would not be located in the area of the edge seal. The edge seal may simply comprise an adhesive interface between the glass surfaces 70, 74. The edge seal provides a seal against moisture as well as contaminants and serves to prevent the liquid crystal material from deteriorating.

In view of the foregoing, it will be appreciated that the present invention provides for adjustment of the amount of or proportion of incident light modulated by a sunroof, window or a partition. The present invention may also be utilized in the construction of other components such as a sun visor for a vehicle.

A liquid crystal panel or partition 150 utilized in a building structure is illustrated in Fig. 7. Such a panel may function, e.g., as an architectural window, skylight, or interior building partition. The panel may be utilized to scatter light, to provide privacy by diffusing images or to eliminate glare and hot spots.

The partition 150 includes first and second transparent surfaces 152, 154. The transparent surfaces permit the transmission of visible light through the partition. Like the transparent surfaces of partition 20, transparent surfaces 152, 154 may be fabricated from a material that provides maximum visible light transmission. These surfaces may also have anti-abrasive characteristics that make them scratch-resistant. A tempered glass may be used to form surfaces 152, 154. One or both surfaces may be tinted so that absorption is a function of the path of the light passing through the panel.

Partition 150 may possess safety glazing properties. Accordingly, the outside glass surface 152 may be adhered to a plastic substrate 156 by means of an optically transparent adhesive 158. This transparent adheseive may have ultraviolet light-blocking properties, to protect the liquid crystal layer 160 and vehicle or building interior from yellowing and fading. The plastic substrate 156 is also optically transparent and may comprise such materials as polyester or polyethersulfone. An example of an optical adhesive is Adlam^{R} or PVB. The partition, of course, may be constructed without safety glazing properties by eliminating substrate 156.

Partition 150 further includes a layer of liquid crystal material 160 of the type discussed heretofore. Additionally, partition 150 includes electrodes 162, 164 preferably disposed at opposite sides of surfaces of the liquid crystal material 160 to extend over, across and parallel to the respective sides or surfaces of the liquid crystal material. As in the case of the vehicle sunroof, window or interior partition, electrodes 162, 164 may be formed, e.g., from various materials such as indium oxide, tin oxide, or indium tin oxide.

Partition 150 may further incorporate a layer 166. Material or layer 166 may reflect infrared and/or visible light, where reflection significantly varies as a function of the angle of incident light. Such an effect can be achieved with a material with a high index of refraction, where transition of light from high index to low index (air) will cause total reflection at a relatively low divergence angle from normal. Such a high index material could be indium tin oxide or tin oxide. Layer 166 may be located as a layer on the surface of the panel which faces the interior 175 of the building or vehicle.

The electrode 162 and the light reflective material 166 may also be the same part and may take the form of a stainless steel, tin oxide or gold, optically transparent, infrared reflective, and electrically conductive coating on layer 160. The layer 166 may preferentially reflects infrared light while allowing visible radiation to pass. Reducing the transmission of infrared energy through the partition 150 will reduce the general heat load as well as hot spots.

As discussed heretofore, an electrical circuit 168 for selectively applying or not an electric field to the liquid crystal material 160 may be provided as shown in Fig. 7. The circuit includes an electric power source 170, a switch 172, and appropriate electrical leads for connecting the power source to electrodes 162, 164. In the absence of an electric field, the liquid crystal material is in the field-off or de-energized condition or mode. When the switch is closed, an electric field is applied across the liquid crystal material, which then goes into the field on condition or mode.

When no field is applied, switch 172 open, light incident on partition 150, such as that representing by light beam 174, is refracted and back scattered (diffusely reflected). Back scattering refers to scattering incident light back toward its source. Scattering light in this manner provides energy control for both visible and infrared energy. Closing switch 172 and thereby applying an electric field across the liquid crystal material, permits the transmission of light through panel 150 and dramatically reduces back scattering.

Circuit 168 may, alternatively, also include a variable element (not shown) for varying the magnitude of the electric field across the liquid crystal material and thus varying the modulation of light.

As discussed, scattering of light creates privacy, and eliminates glare and hot spots. Scattering also serves to reduce general heat load. General heat load can be reduced by scattering in three ways: (1) When light is scattered back towards its source (much like reflection except than no coherent images are created by back scattering); (2) When scattered light passes through another material which reduces heat load by absorbing scattered light more (due to longer path length) or by reflecting scattered light more (due to more light striking the material at angles above the critical angle of reflection); and (3) When scattered light exits another window rather than striking the building interior or the vehicle interior. This last effect is particularly noticeable when a vehicle sunroof scatters incoming light such that a portion exits the side glass and windshield.

When a high degree of scattering exists, a low level of thermal load on a building or vehicle can be achieved. When a field is applied to the liquid crystal layer, scattering is dramatically reduced and thermal load on a building or vehicle can be increased and a high degree of transparency achieved.

As an alternative embodiment, the liquid crystal material 160 of the partition may include an infrared dye that absorbs infrared energy, thereby providing additional control over the amount of infrared energy transmitted to the interior of a vehicle or building. Such an infrared dye would vary infrared absorption as a function of field.

## Claims

1. A liquid crystal panel comprising first and second transparent sheets (22, 24, 152, 154) through which visible light incident thereon may be transmitted; a liquid crystal means (26, 160) located between said transparent sheets for controlling the amount of light transmitted through the panel as a function of a selected predetermined electric field applied across the liquid crystal means; and two transparent electrodes (32, 34, 73, 78, 162, 164) for applying said electric field between which the liquid crystal means is placed, the liquid crystal means consisting of a liquid crystal material (44) operationally nematic having positive dielectric anisotropy which is confined within discrete volumes by a containment medium (48), the containment medium inducing in the liquid crystal molecules of the discrete volumes a generally distorted alignment which results in an isotropic scattering of incident light when no electric field is applied, the amount of said scattered light being reduced when said electric field is applied; characterised in that the panel further comprises a polarizer (38) the axis of absorption of which is perpendicular to the panel.

2. A panel as claimed in Claim 1, characterised in that at least one transparent sheet is a plastic film adhered to a glass sheet.

3. A panel as claimed in any preceding claim characterised by at least one layer for reducing the amount of infrared energy transmitted through said panel.

4. A panel as claimed in any preceding claim, characterised by means (36) for absorbing ultraviolet radiation incident thereon.

5. A panel as claimed in any preceding claim, characterised by a depolarizer (40) for altering the polarization of light prior to incidence on said liquid crystal material.

6. A panel as claimed in any preceding claim, characterised in that said first and second transparent sheets have anti-abrasive properties.

7. A panel as claimed in any of Claims 2 to 6 as dependent upon Claim 2, characterised in that said first transparent sheet is an outer surface that is formed of glass that includes said infrared energy reducing layer.

8. A panel as claimed in Claim 7, characterised in that said second transparent sheet is an inner surface that has anti-lacerative or shatter-resistant properties.

9. A panel as claimed in any preceding claim, characterised in that one of said transparent sheets comprises a flexible, scratch-resistant plastics film (24) carrying an electrically-conductive, optically transparent coating and said liquid crystal material.

10. A panel as claimed in Claim 1, characterised in that said liquid crystal material is birefringent and has an ordinary index of refraction in the presence of an electric field that is substantially matched to the index of refraction of said containment medium to minimize refraction and scattering of light and an extraordinary index of refraction in the absence of such electric field that is different from the index of refraction of said containment medium to cause refraction and scattering of light.

11. A panel as claimed in Claim 1, characterised in that at least one of said transparent sheets is electrically conductive and comprises at least one of said electrodes.

12. A panel as claimed in any one of Claims 1 to 11, characterised by pleochroic dye in said liquid crystal material.

13. A panel as claimed in Claim 12 characterised in that the structure of said pleochroic dye conforms to the structure of said liquid crystal material, said dye being operative to absorb light when said liquid crystal structure is in distorted alignment.

14. A panel as claimed in any preceding claim, characterised in that at least one of said transparent sheets is tinted.

15. A panel as claimed in any preceding claim, characterised in that at least one of said transparent sheets is coated with a material with a high index of refraction.

16. A panel as claimed in any preceding claim, characterised by a layer for reflecting visible light.

17. A panel as claimed in Claim 3, characterised in that said infrared energy reducing layer comprises an infrared energy absorbing dye in said liquid crystal material.

18. A panel as claimed in Claim 3, characterised in that said infrared energy reducing layer comprises a layer for preferentially reflecting infrared light.

## Patentansprüche

1. Flüssigkristalltafel mit einer ersten und einer zweiten transparenten Schicht (22, 24, 152, 154), durch welche darauf fallendes sichtbares Licht hindurchgelassen werden kann, mit einer Flüssigkristalleinrichtung (26, 160), die zwischen den transparenten Schichten zur Steuerung der Lichtmenge angeordnet ist, die durch die Tafel als Funktion eines ausgewählten, vorher festgelegten elektrischen Feldes durchgelassen wird, das über der Flüssigkristalleinrichtung angelegt wird, und mit zwei transparenten Elektroden (32, 34, 73, 78, 162, 164) zum Anlegen des elektrischen Feldes, zwischen denen die Flüssigkristalleinrichtung angeordnet ist, welche aus einem im Betrieb nematischen Flüssigkristallmaterial (44) mit positiver dielektrischer Anisotropie besteht, das innerhalb diskreter Volumina durch ein Einschließungsmedium (48) begrenzt ist, welches in den Flüszigkristallmolekülen der diskreten Volumina eine insgesamt verzerrte Ausrichtung induziert, die eine isotrope Streuung des einfallenden Lichtes ergibt, wenn kein elektrisches Feld angelegt ist, wobei die Menge des Streulichts reduziert wird, wenn das elektrische Feld angelegt wird, dadurch gekennzeichnet, daß die Tafel weiterhin einen Polarisator (38) aufweist, dessen Absorptionsachse senkrecht zu der Tafel ist.

2. Tafel nach Anspruch 1, dadurch gekennzeichnet, daß wenigstens eine transparente Schicht eine Kunststofffolie ist, die an einer Glasscheibe haftet.

3. Tafel nach einem vorhergehenden Anspruch, gekennzeichnet durch wenigstens eine Schicht zur Reduzierung der Infrarot-Energiemenge, die durch die Tafel durchgelassen wird.

4. Tafel nach einem vorhergehenden Anspruch, gekennzeichnet durch eine Einrichtung (36) zum Absorbieren von darauf einfallender Ultraviolett-Strahlung.

5. Tafel nach einem vorhergehenden Anspruch, gekennzeichnet durch einen Depolarisator (40) zum Ändern der Polarisierung des Lichts vor dem Einfall auf das Flüssigkristallmaterial.

6. Tafel nach einem vorhergehenden Anspruch, dadurch gekennzeichnet, daß die erste und die zweite transparente Schicht Verschleißwiderstandseigenschaften haben.

7. Tafel nach einem der Ansprüche 2 bis 6, soweit sie abhängig von Anspruch 2 sind, dadurch gekennzeichnet, daß die erste transparente Schicht eine Außenfläche ist, die aus Glas besteht, welches die die Infrarotenergie reduzierende Schicht einschließt.

8. Tafel nach Anspruch 7, dadurch gekennzeichnet, daß die zweite transparente Schicht eine Innenfläche ist, die zerreißwiderstandsfähige oder bruchfeste Eigenschaften hat.

9. Tafel nach einem vorhergehenden Anspruch, dadurch gekennzeichnet, daß eine der transparenten Schichten eine flexible kratzfeste Kunststoffolie (24) aufweist, welche eine elektrisch leitende, optisch transparente Beschichtung und das Flüssigkristallmaterial trägt.

10. Tafel nach Anspruch 1, dadurch gekennzeichnet, daß das Flüssigkristallmaterial optisch doppelbrechend ist und einen ordentlichen Brechungsindex in Anwesenheit eines elektrischen Feldes, der im wesentlichen dem Brechungsindex des Einschließungsmediums entspricht, um die Lichtbrechung und Lichtstreuung auf ein Minimum zu reduzieren, sowie einen außerordentlichen Brechungsindex in Abwesenheit eines solchen elektrischen Feldes aufweist, der sich von dem Brechungsindex des Einschließungsmediums unterscheidet, um eine Lichtbrechung und Lichtstreuung herbeizuführen.

11. Tafel nach Anspruch 1, dadurch gekennzeichnet, daß wenigstens eine der transparenten Schichten elektrisch leitend ist und wenigstens eine der Elektroden aufweist.

12. Tafel nach einem der Ansprüche 1 bis 11, gekennzeichnet durch eine pleochroitische Farbe in dem Flüssigkristallmaterial.

13. Tafel nach Anspruch 12, dadurch gekennzeichnet, daß die Struktur der pleochroitischen Farbe der Struktur des Flüssigkristallmaterials entspricht, wobei die Farbe so wirksam ist, daß sie Licht absorbiert, wenn die Flüssigkristallstruktur sich in der verzerrten Ausrichtung befindet.

14. Tafel nach einem vorhergehenden Anspruch, dadurch gekennzeichnet, daß wenigstens eine der transparenten Schichten getönt ist.

15. Tafel nach einem vorhergehenden Anspruch, dadurch gekennzeichnet, daß wenigstens eine der transparenten Schichten mit einem Material überzogen ist, das einen hohen Brechungsindex hat.

16. Tafel nach einem vorhergehenden Anspruch, gekennzeichnet durch eine Schicht zum Reflektieren von sichtbarem Licht.

17. Tafel nach Anspruch 3, dadurch gekennzeichnet, daß die die Infrarot-Energie reduzierende Schicht eine Infrarotenergie absorbierende Farbe in dem Flüssigkristallmaterial aufweist.

18. Tafel nach Anspruch 3, dadurch gekennzeichnet, daß die die Infrarot-Energie reduzierende Schicht eine Schicht zum vorzugsweisen Reflektieren von infrarotem Licht aufweist.

## Revendications

1. Panneau à cristaux liquides comportant des première et seconde feuilles transparentes (22, 24, 152, 154) à travers lesquelles une lumière visible qui leur est incidente peut être transmise ; des moyens à cristaux liquides (26, 160) placés entre lesdites feuilles transparentes pour commander la quantité de lumière transmise à travers le panneau en fonction d'un champ électrique prédéterminé et sélectionné appliqué à travers les moyens à cristaux liquides ; et deux électrodes transparentes (32, 34, 73, 78, 162, 164) destinées à appliquer ledit champ électrique et entre lesquelles les moyens à cristaux liquides sont placés, les moyens à cristaux liquides consistant en une matière (44) à cristaux liquides fonctionnellement nématique ayant une anisotropie diélectrique positive qui est renfermée à l'intérieur de volumes discrets par un milieu (48) de retenue, le milieu de retenue induisant dans les molécules des cristaux liquides des volumes discrets un alignement globalement déformé qui a pour résultat une diffusion isotrope de la lumière incidente lorsqu'aucun champ électrique n'est appliqué, la quantité de ladite lumière diffusée étant réduite lorsque ledit champ électrique est appliqué ; caractérisé en ce que le panneau comporte en outre un polariseur (38) dont l'axe d'absorption est perpendiculaire au panneau.

2. Panneau selon la revendication 1, caractérisé en ce qu'au moins une feuille transparente est un film de matière plastique collé à une feuille de verre.

3. Panneau selon l'une quelconque des revendications précédentes, caractérisé par au moins une couche destinée à réduire la quantité d'énergie infrarouge transmise à travers ledit panneau.

4. Panneau selon l'une quelconque des revendications précédentes, caractérisé par des moyens (36) pour absorber un rayonnement ultraviolet qui lui est incident.

5. Panneau selon l'une quelconque des revendications précédentes, caractérisé par un dépolariseur (40) destiné à modifier la polarisation de la lumière avant qu'elle soit incidente sur ladite matière à cristaux liquides.

6. Panneau selon l'une quelconque des revendications précédentes, caractérisé en ce que lesdites première et seconde feuilles transparentes ont des propriétés anti-abrasives.

7. Panneau selon l'une quelconque des revendications 2 à 6, en dépendance de la revendication 2, caractérisé en ce que ladite première feuille transparente est une surface extérieure qui est formée de verre qui comprend ladite couche de réduction de l'énergie infrarouge.

8. Panneau selon la revendication 7, caractérisé en ce que ladite seconde feuille transparente est une surface intérieure qui possède des propriétés anti-lacération ou de résistance à l'éclatement.

9. Panneau selon l'une quelconque des revendications précédentes, caractérisé en ce que l'une desdites feuilles transparentes comprend un film (24) de matière plastique flexible, résistant aux rayures, portant un revêtement optiquement transparent, électriquement conducteur et ladite matière à cristaux liquides.

10. Panneau selon la revendication 1, caractérisé en ce que ladite matière à cristaux liquides est biréfringente et possède un indice de réfraction ordinaire en présence d'un champ électrique qui est sensiblement adapté à l'indice de réfraction dudit milieu de retenue pour minimiser la réfraction et la diffusion de la lumière et un indice de réfraction extraordinaire en l'absence de ce champ électrique, qui est différent de l'indice de réfraction dudit milieu de retenue pour provoquer une réfraction et une diffusion de la lumière.

11. Panneau selon la revendication 1, caractérisé en ce qu'au moins l'une desdites feuilles transparentes est électriquement conductrice et comporte au moins l'une desdites électrodes.

12. Panneau selon l'une quelconque des revendications 1 à 11, caractérisé par un colorant pléochroïque dans ladite matière à cristaux liquides.

13. Panneau selon la revendication 12, caractérisé en ce que la structure dudit colorant pléochroïque est conforme à la structure de ladite matière à cristaux liquides, ledit colorant ayant pour fonction d'absorber de la lumière lorsque ladite structure à cristaux liquides est en alignement déformé.

14. Panneau selon l'une quelconque des revendications précédentes, caractérisé en ce qu'au moins l'une desdites feuilles transparentes est teintée.

15. Panneau selon l'une quelconque des revendications précédentes, caractérisé en ce qu'au moins l'une desdites feuilles transparentes est revêtue d'une matière ayant un indice de réfraction élevé.

16. Panneau selon l'une quelconque des revendications précédentes, caractérisé par une couche pour réfléchir la lumière visible.

17. Panneau selon la revendication 3, caractérisé en ce que ladite couche de réduction de l'énergie infrarouge comprend un colorant absorbant l'énergie infrarouge dans ladite matière à cristaux liquides.

18. Panneau selon la revendication 3, caractérisé en ce que ladite couche de réduction de l'énergie infrarouge comprend une couche pour réfléchir préférentiellement la lumière infrarouge.
